# EUROPEAN PATENT SPECIFICATION

(11) **EP 1 862 075 B1**
(45) Date of publication and mention of the grant of the patent: **03.06.2009**
(21) Application number: 07106736.7
(22) Date of filing: 23.04.2007
(51) Int. Cl.: A23B 7/02, C12G 1/00, C12G 1/02

(54) **Raisining method for promoting the formation in the berries of Botrytis cinerea in noble form in order to improve the organoleptic properties of wines**
Trocknungsverfahren zur Förderung der Bildung von Botrytis cinerea in die Form der Edelfäule in Traubenbeeren zum Verbessern der organoleptischen Eigenschaften von Weinen
Procédé de séchage permettant de favoriser la formation de Botrytis cinerea sous forme de pourriture noble dans les baies de raisin pour améliorer les propriétés organoleptiques de vins

(30) Priority: 31.05.2006 IT PD20060222
(43) Date of publication of application: 05.12.2007
(73) Proprietor: Sordato S.r.l., 37032 Monteforte d'Alpone VR (IT)
(72) Inventor: Ferrarini, Roberto, 37022, Fumane (VR) (IT)
(74) Representative: Gallo, Luca

(56) References cited:
- FR-A- 2 665 828
- DATABASE FSTA [Online] INTERNATIONAL FOOD INFORMATION SERVICE (IFIS), FRANkFURT-MAIN, DE; Revue des oenologues 1993, MOREL D: "Passerillage ((partial drying)) of wine grapes." XP002442833 Database accession no. 94-1-02-h0073 & MOREL D: REVUE DES OENOLOGUES ET DES TECHNIQUES VITIVINICOLES ET OENOLOGIQUES, 1993,

## Description

### Technical field

The present invention relates to a raisining method for promoting the formation in the berries of *Botrytis cinerea* in the noble form in order to improve the organoleptic properties of wines.

The process in question is intended to be used advantageously by wine-making companies in vinification processes for obtaining wines made from dried grapes.

### Background art

The practice of raisining grapes has been known since ancient times when grapes were often picked and dried in order to produce sweet and fortified wines which could be more easily stored and which suited more the palate of that era.

The technique has become particularly widespread in the production area around Verona where the wines "Amarone della Valpolicella" and "Il Recioto di Soave" or "Il Recioto della Valpolicella" are made using this procedure.

Over the course of the centuries the technique has been modified both as regards the process and as regards the desired results. At present the picked grapes which are to be dried, after careful selection, are placed on trellises or inside crates and stored in dry and well-ventilated areas (fruit depositories). Here the grapes are left to dry for a period which generally spans a few months. During this period of time, a drying process, more correctly called an "overmaturation" process, takes place and causes dehydration of the grapes due to the evaporation of the water contained in the berries, along with a series of metabolic and chemical changes in the grapes which give the wines made from them their well-known properties in terms of taste and quality.

This drying process must be carefully controlled in order to avoid the formation of *Botrytis cinerea* in its common form ("grey rot"), which causes a serious deterioration of the product. On the other hand, in the case of white grapes, the presence of *Botrytis cinerea* in larva form ("noble rot"), which is different in that it develops mainly inside the berry, gives rise, as is known, to physical and chemical changes in the grape which allow the production of highly prized wines.

*Botrytis cinerea* in its noble form is not evident from the outside of the grape even though the colour and appearance of the berries change radically and there is a rapid evaporation of water and consequent increase in the sugar concentration which amply offsets the effect of catabolism of the berries by the fungus. During metabolism of the mould, metabolic products which are typically not present in healthy grapes (gluconic acid, glycerol, etc.) are produced, some of these playing an important role from a qualitative or technological point of view; the modification of the aroma also has a very important role in this connection.

In the case of noble rot, the fungus arising from particular hygrometric conditions does not complete its parasitic action, but causes the appearance of a mould in larva form with an anaerobic metabolism, managing to produce chemical modifications which subsequently have an effect on the organoleptic properties of the wine.

The drying process causes a plurality of metabolic modifications in the berries which influence the formation of *Botrytis cinerea* in noble form. The drying is not only a physical dehydration process, but also a complex biological process which involves sugars, organic acids, phenols, etc. For example, during drying, a reduction in the malic acid, carbohydrates and nitrogen-containing substances and solubilisation of polyphenolic substances occur.

At the moment, because of the complexity of the physical and metabolic modifications occurring in the berry, it has not been possible to control the process of formation of noble rot, in particular as regards its simultaneous diffusion over a large part of the treated grape.

The development of *Botrytis* in its noble form occurs in the field following particular climatic conditions, which are difficult for wine producers to control. For example, as is known, the zone of Sauternes in France has particular and favourable climatic conditions which are subject to the beneficial effects of the Atlantic and the waterways present in the region.

These conditions allow the formation of noble rot and therefore the production of wines of considerable prestige.

The terrain is also important for the formation of noble rot. For example it has been possible to note that terrain which is able to absorb water easily and which remains dry also during the late autumn season, such as siliceous, sandy or pebbly ground, produces much better results than clayey, compact or excessively soft terrain.

At present, as is known, it is practically impossible to control in the field the formation of this noble rot on account of the particular climatic conditions required, over which obviously the wine producer has little control.

Because of the incomplete knowledge of the phenomena which are responsible for the development of noble rot at present it is practically impossible to control its evolution in the grapes dried in a fruit depository.

In any case, in order to control the drying process, avoiding at the same time "grey rot", control of the microclimate of the environment (fruit depository) - and therefore the suitable use of the plants for conditioning the environment - is of decisive importance.

At present the producers make do with ensuring that there is a good dehydration process by regulating in particular the environmental parameters relating to relative humidity and ventilation.

Document FR 2665828, for example, discloses a method to enrich the grapes before the pressing. According to the invention therein described, the grapes are stocked in bored boxes, disposed by columns, through which an air flow is forced to pass. The air flow, previously passing through a dehumidifier, a compressor and a heater, allows the correct drying and dehydration of the grapes.

Even where the presence of *Botrytis cinerea* in its noble form is noted, the berries affected generally represent a small percentage and development of the fungus does not occur at the same time.

Therefore, the beneficial influence of "noble rot" is only partly exploited.

Generally, the grapes, which are left to dry in these well-ventilated premises (fruit depositories), may remain there for the whole of the autumn, exposed to atmospheric phenomena which result in the berries losing water during the dry days and reacquiring it during hot and humid days. The influence of the climate on the quality of the wine therefore does not terminate with picking, but continues after picking until crushing is performed. Therefore, it is possible to have perfect maturing of the grape and on the other hand an unfavourable climatic trend for drying, thus reducing drastically the statistical probability of there being a year which is climatically favourable for the production of these wines. In some cases the grapes which undergo drying not only do not develop noble rot, but even decay with a production loss of even more than 50%. Therefore, the use of plants for ventilation and for controlling the thermo-hygrometric conditions of the environment has become widespread; this has allowed an improvement in the production of dried grapes, but not control over the development of noble rot.

In order to favour the development of noble rot techniques for treating the bunches of grapes in the field by means of inoculation of the bunches with suitable strains of *Botrytis cinerea* are known. These techniques, in addition to being particularly complex, have been unable to achieve satisfactory results.

### Disclosure of the invention

In this situation, the main object of the present invention is therefore to eliminate the drawbacks of the methods of the known type mentioned above by providing a raisining method for improving the organoleptic properties of wines, which allows control of the development of *Botrytis cinerea* in its noble form.

Another object of the present invention is to provide a drying method able to determine the formation of the abovementioned mould in a simultaneous manner over all the berries and all the bunches which are treated.

A further object of the present invention is to provide a drying method which is simple, low-cost and operationally entirely reliable.

The technical features of the invention, in accordance with the abovementioned objects, may be clearly determined from the contents of the claims provided below and the advantages thereof will emerge more clearly from the detailed description which follows, provided with reference to a purely exemplary and nonlimiting embodiment.

### Detailed description of a preferred example of embodiment

The drying method for improving the organoleptic properties of wines according to the present invention may be used on any type of grape for the purpose of vinification. The same procedure may, however, be optimized depending on the individual grapes by modifying the process variables in order to take into account the type of grape as well as the results which are to be achieved.

The drying process according to the present invention is able to be incorporated advantageously within an already known technology of vinification which envisages, in particular, before drying, picking of the grape at the desired stage of maturation and subsequent storage in equipped premises (fruit depositories) where the drying process takes place, and, after drying, pressing, fermentation and then refining.
In greater detail, the premises for storing the grapes which are equipped for drying are associated with air conditioning plants which are suitably equipped with means for performing ventilation and for controlling the humidity and temperature.

The steps after drying may involve the already known techniques of crushing, pressing, fermentation and refining, although these must advantageously take into account, as will be explained more fully below, the modifications which have already taken place in the berries during the course of the particular drying method.

The bunches are stored in the premises, placing them on traditional trellises or inside plastic or wooden crates.

According to the idea forming the basis of the present invention, a dehydration step is envisaged, this step being able to produce a concentration of the sugars present in the berries greater than or equal to 20 degrees Brix and preferably between 30 and 40 degrees Brix, followed by a humidification step in an atmosphere having a relative humidity greater than 95% and a conservation step in an atmosphere having a relative humidity less than 80%.

The dehydration step, in addition to enriching the berry with sugars, also causes a deterioration of the skin and reduction in the defence mechanisms which allow a greater development of the *Botrytis cinerea;* during this step complex metabolic and physical changes take place within the berries.

The dehydration step may last for a period of 2 to 90 days depending on the desired results and the type of grape, in particular, for example, depending on the thickness of the skin of the berries. This step results in a reduction of 10-40% by weight of the berries and is conducted at temperatures of between 5 and 25°C.

Advantageously, the dehydration step is performed at a relative humidity of between 60% and 80%, and preferably in particular at a humidity of about 65% the best results have been obtained for the subsequent development of *Botrytis cinerea* in its noble form.

Hitherto the grape in this situation, before being attacked by the *Botrytis cinerea,* undergoes a metabolism of a mainly "respiratory" nature which, in addition to having a function for the subsequent initiation and development of the *Botrytis cinerea,* constitutes a pre-treatment which will subsequently influence the organoleptic qualities of the wine at the end of the vinification process. This pre-treatment, in addition to causing a concentration of the sugars and modification of the peptic substances which form the skin in order to allow the subsequent development of noble rot, may be extended in order to take account of the organoleptic changes which occur in the berry and which affect the final properties of the wine; the duration of this stage may vary from a few days to three months.

In turn, the humidification step may last for a period of 1-15 days and preferably for a period of 2 to 7 days, at temperatures of between 10 and 20 deg. C and advantageously in an atmosphere with a relative humidity substantially equal to 100%; moreover, the partial or complete wetting of the grape may be envisaged.

The humidity may be achieved by means of direct dispersion systems, atomizers, humidifiers or other similar means.

The subsequent conservation step will be extended until the berries have reached the required degree of drying and will be conducted in an atmosphere having a lower relative humidity, less than 80%, and preferably between 50 and 80% with temperatures within the range of 5 to 25°C.

In accordance with a further embodiment of the method according to the present invention, it is possible to envisage inoculation of the mould *Botrytis cinerea* following the dehydration step and at the same time as the humidification step.

Drying of the grape in the fruit depositories will be performed using processes for regulating the thermo-hygrometric parameters of the environment implemented by means of an air treatment plant suitable for performing regulation in accordance with predetermined humidity, temperature and time values which can be managed by means of a PC.

In greater detail, the air treatment plant is suitably equipped with one or more units for performing ventilation and controlling the humidity and the temperature.

Advantageously in accordance with a further characteristic feature of the present invention, the humidification step starts automatically after the dehydration step has produced a reduction in weight detected by means of a detection sensor associated with grape containing means. This reduction is in particular in the region of 10-40%. It is in fact possible to relate the loss in weight to the increase in the sugar concentration. Therefore, the start of the humidification step may advantageously and automatically be envisaged upon reaching a given weight reduction, which is equivalent to a given sugar concentration.

This weight detection sensor associated with the grape containing means sends a signal to the unit controlling the plant for regulating the humidity and/or temperature and/or ventilation values depending on the real weight reduction which has occurred inside the grape. In particular, the ventilation may be modulated so as to obtain the desired weight reduction within a predetermined time period.

The sensor is advantageously associated with the grape containing means situated in an area which it is considered has conditions representing those throughout the drying premises.

Obviously, in particular in the case of particularly large premises, several sensors communicating with the control unit may be used.

On the control unit it is possible to set a programmed weight reduction function by entering the temperature and/or humidity and/or ventilation values which are to be assumed by the environment of the drying premises during the overmaturation period.

The method according to the invention may also envisage an alternation of further dehydration steps in an atmosphere having a relative humidity ranging between 60% and 80% and preferably in the region of 65% and humidification in an atmosphere with a relative humidity greater than 95%.

With the method according to the invention it is possible to obtain high-quality dried grapes for the production of wines of the type: Amarone, Recioto, Vin Santo, and raisin wines in general and in particular white wines.

Advantageously, it has been possible to establish surprisingly that, during the grape dehydration step, changes occur within the berries such as to favour the subsequent initial formation of noble rot when high relative humidity values exist within the environment of the fruit depository. It seems likely that the effect of the high humidity on the berries, which have undergone prior dehydration and are richer in sugars which may as a result of exosmosis be present on the surface of the skin, produces conditions which are favourable for the development of *Botrytis cinerea* in its noble form.

Even more surprisingly it has been possible to establish that this formation occurs in a widespread and simultaneous manner over all the berries, allowing the picking of the grapes from the trellises or the crates for crushing in an optimum dried condition infected by noble rot. This allows vinification of the grapes with simultaneous removal thereof from the storage premises without a costly pre-selection process, thus resulting in the vinification of grapes which have been subject to the beneficial action of the noble rot.

In fact, once the berries have been attacked by the *Botrytis cinerea* in its noble form, the skin is substantially perforated so that drying may proceed at a very rapid rate.

In fact it can been observed that all the berries undergo rapidly the same degree of drying and it is therefore easy to choose the moment for vinification thereof, without being subject to excessive dehydration which would hinder subsequent processing.

Otherwise unsynchronized drying would result in costly selective picking or accepting compromise conditions where the berries are dried too much or too little with results which are not optimum for the quality of the wine made from them.

The most extraordinary result is that of obtaining high-quality wines at a cost much lower than that required hitherto for the production of wine produced exclusively using grapes affected by noble rot.

The method thus conceived therefore achieves the predefined objects.

Obviously it may also assume, in its practical embodiment, variations different from that illustrated above without thereby, for this reason, departing from the present scope of protection.

Moreover, all the details may be replaced by technically equivalent elements.

## Claims

1. Raisining method for promoting the formation in the berries of *Botrytis cinerea* in noble form in order to improve the organoleptic properties of wines, which comprises the following operating stages:
- picking the grapes from the vines;
- storing the picked grapes in premises equipped for an overmaturation period;
- treating the grapes stored using conditioning processes at a controlled temperature and humidity;
**characterized in that** said treatment comprises:
- at least one dehydration step able to produce a concentration of the sugars present in the berries greater than or equal to 20 degrees Brix;
- at least one subsequent humidification step in an atmosphere having a relative humidity greater than 95%;
- at least one subsequent conservation step in an atmosphere having a relative humidity of less than 80%.

2. Method according to Claim 1, **characterized in that** said dehydration step lasts for a period of 2 to 90 days.

3. Method according to Claim 1, **characterized in that** said humidification step lasts for a period of 1 to 15 days.

4. Method according to Claim 1, **characterized in that** said dehydration step is performed at temperatures of between 5 and 25°C.

5. Method according to Claim 1, **characterized in that** said humidification step is performed at temperatures of between 5 and 25°C.

6. Method according to Claim 1, **characterized in that** said humidification step is performed in at atmosphere having a relative humidity substantially equal to 100% and, if necessary, by spraying the grapes with water.

7. Method according to Claim 1, **characterized in that** said treatment comprises a step involving inoculation of the mould *Botrytis cinerea* in noble form following said dehydration step.

8. Method according to Claim 1, **characterized in that** said step involving inoculation of the mould *Botrytis cinerea* takes places during said humidification step.

9. Method according to Claim 1, **characterized in that** said dehydration step is performed at a relative humidity of between 60% and 80% and preferably in the region of 65%.

10. Method according to Claim 1, **characterized in that** said humidification step commences after dehydration equal to a weight reduction of 10-40%.

11. Method according to Claim 10, **characterized in that** said humidification step commences automatically when a weight detection sensor associated with grape containing means has detected said weight reduction.

12. Method according to Claim 1, **characterized in that** it comprises an alternation of further dehydration steps in an atmosphere having a relative humidity ranging between 60% and 80% and preferably in the region of 65%, and humidification in an atmosphere with a relative humidity greater than 95%.

## Patentansprüche

1. Trocknungsverfahren zur Förderung der Bildung von Botrytis cinerea in Form von Edelfäule in Traubenbeeren zum Verbessern der organoleptischen Eigenschaften von Weinen, das die nachfolgenden Stufen aufweist:
Pflücken der Trauben von den Rebstöcken;
- Lagern der gepflückten Trauben in Räumlichkeiten, die für eine Überreifungszeit ausgestattet sind;
- Verarbeiten der gelagerten Trauben unter Verwendung von Aufbereitungsverfahren bei einer kontrollierten Temperatur und Feuchtigkeit;
**dadurch gekennzeichnet, dass** diese Verarbeitung folgendes aufweist:
- mindestens einen Dehydrierungsschritt, bei dem eine Konzentration des in den Beeren vorhandenen Zuckers von mehr als oder gleich 20 Grad Brix erzeugt werden kann;
- mindestens einen anschließenden Schritt der Befeuchtung in einer Atmosphäre mit einer relativen Feuchtigkeit von mehr als 95 %;
- mindestens einen anschließenden Konservierungsschritt in einer Atmosphäre mit einer relativen Feuchtigkeit von weniger als 80 %.

2. Verfahren nach Anspruch 1, **dadurch gekennzeichnet, dass** der Dehydrierungsschritt zwei (2) bis neunzig (90) Tage dauert.

3. Verfahren nach Anspruch 1, **dadurch gekennzeichnet, dass** der Schritt der Befeuchtung ein (1) bis fünfzehn (15) Tage dauert.

4. Verfahren nach Anspruch 1, **dadurch gekennzeichnet, dass** der Dehydrierungsschritt bei Temperaturen zwischen 5 und 25 °C durchgeführt wird.

5. Verfahren nach Anspruch 1, **dadurch gekennzeichnet, dass** der Schritt der Befeuchtung bei Temperaturen zwischen 5 und 25 °C durchgeführt wird.

6. Verfahren nach Anspruch 1, **dadurch gekennzeichnet, dass** der Schritt der Befeuchtung in einer Atmosphäre mit einer relativen Feuchtigkeit von im wesentlichen gleich 100 % durchgeführt wird und bei Bedarf durch Besprühen der Traube mit Wasser.

7. Verfahren nach Anspruch 1, **dadurch gekennzeichnet, dass** die Verarbeitung einen Schritt der Inokulation des Schimmelpilzes Botrytis cinerea in Form von Edelfäule nach dem Dehydrierungsschritt aufweist.

8. Verfahren nach Anspruch 1, **dadurch gekennzeichnet, dass** der Schritt der Inokulation des Schimmelpilzes Botrytis cinerea während des Schrittes der Befeuchtung stattfindet.

9. Verfahren nach Anspruch 1, **dadurch gekennzeichnet, dass** der Dehydrierungsschritt bei einer relativen Feuchtigkeit zwischen 60 % und 80 % und vorzugsweise im Bereich von 65 % durchgeführt wird.

10. Verfahren nach Anspruch 1, **dadurch gekennzeichnet, dass** der Schritt der Befeuchtung nach der Dehydrierung beginnt, die einer Gewichtsreduzierung von 10 bis 40 % entspricht.

11. Verfahren nach Anspruch 10, **dadurch gekennzeichnet, dass** der Schritt der Befeuchtung automatisch beginnt, wenn ein Gewichtserkennungssensor, der mit Einrichtungen, welche Trauben enthalten, verbunden ist, die Gewichtsreduzierung festgestellt hat.

12. Verfahren nach Anspruch 1, **dadurch gekennzeichnet, dass** es einen Wechsel weiterer Dehydrierungsschritte in einer Atmosphäre mit einer relativen Feuchtigkeit zwischen 60% und 80% und vorzugsweise im Bereich von 65 % mit einer Befeuchtung in einer Atmosphäre mit einer relativen Feuchtigkeit von mehr als 95 % aufweist.

## Revendications

1. Procédé de séchage permettant de favoriser la formation dans les baies de raisin de *Botrytis cinerea* dans une forme noble afin d'améliorer les propriétés organoleptiques de vins, ce procédé comprenant les stades d'opération suivants :
- cueillir les grappes à partir des vignes ;
- stocker les grappes cueillies dans des locaux équipés pour une période de surmaturation ;
- traiter les grappes stockées à l'aide de procédés de conditionnement à une température contrôlée et sous une humidité contrôlée ;
**caractérisé par le fait que** ledit traitement comprend :
- au moins une étape de déshydratation capable de produire une concentration des sucres présents dans les baies supérieure ou égale à 20 degrés Brix ;
- au moins une étape d'humidification subséquente dans une atmosphère ayant une humidité relative supérieure à 95 % ;
- au moins une étape de conservation subséquente dans une atmosphère ayant une humidité relative de moins de 80 %.

2. Procédé selon la revendication 1, **caractérisé par le fait que** ladite étape de déshydratation dure pendant une période de 2 à 90 jours.

3. Procédé selon la revendication 1, **caractérisé par le fait que** ladite étape d'humidification dure pendant une période de 1 à 15 jours.

4. Procédé selon la revendication 1, **caractérisé par le fait que** ladite étape de déshydratation est effectuée à des températures d'entre 5 et 25°C.

5. Procédé selon la revendication 1, **caractérisé par le fait que** ladite étape d'humidification est effectuée à des températures d'entre 5 et 25°C.

6. Procédé selon la revendication 1, **caractérisé par le fait que** ladite étape d'humidification est effectuée dans une atmosphère ayant une humidité relative sensiblement égale à 100 % et, si nécessaire, par pulvérisation d'eau sur les grappes.

7. Procédé selon la revendication 1, **caractérisé par le fait que** ledit traitement comprend une étape mettant en jeu l'inoculation de la moisissure *Botrytis cinerea* dans une forme noble après ladite étape de déshydratation.

8. Procédé selon la revendication 1, **caractérisé par le fait que** ladite étape mettant en jeu une inoculation de la moisissure *Botrytis cinerea* a lieu pendant ladite étape d'humidification.

9. Procédé selon la revendication 1, **caractérisé par le fait que** ladite étape de déshydratation est effectuée à une humidité relative d'entre 60 % et 80 % et de préférence dans la région de 65 %.

10. Procédé selon la revendication 1, **caractérisé par le fait que** ladite étape d'humidification commence après une déshydratation égale à une réduction de poids de 10-40 %.

11. Procédé selon la revendication 10, **caractérisé par le fait que** ladite étape d'humidification commence automatiquement lorsqu'un capteur de détection de poids associé à des moyens contenant les grappes a détecté ladite réduction de poids.

12. Procédé selon la revendication 1, **caractérisé par le fait qu'**il comprend une alternance d'autres étapes de déshydratation dans une atmosphère ayant une humidité relative se situant dans la plage entre 60 % et 80 % et, de préférence, dans la région de 65 %, et une humidification dans une atmosphère ayant une humidité relative supérieure à 95 %.
